# DEMANDE DE BREVET EUROPEEN

(11) **EP 4 683 248 A1**
(43) Date de publication de la demande: **21.01.2026**
(21) Numéro de dépôt: 25188884.8
(22) Date de dépôt: 10.07.2025
(51) Int. Cl.: H04B 7/185

(54) **PROCEDE D ANNONCE DE PRESENCE D EQUIPEMENTS DE TELEPHONIE MOBILE**

(30) Priorité: 17.07.2024 FR 2407792
(71) Demandeur: Airbus Defence and Space SAS, 31402 Toulouse Cedex 4 (FR)
(72) Inventeur: LE CAM, Julien, 78990 ELANCOURT (FR)
(74) Mandataire: Cabinet Le Guen Maillet

(57) **Abrégé**

Dans le cadre d'un service de téléphonie mobile implémenté par un système de communication comportant un équipement satellite relié à un équipement au sol par un lien de communication satellite, l'équipement satellite inclut un équipement de téléphonie mobile de type unité distribuée rattaché à un premier routeur et l'équipement au sol inclut un équipement de téléphonie mobile de type unité centralisée rattaché à un deuxième routeur. Des messages d'annonce de couche réseau ou de couche liaison ayant un format « type-longueur-valeur » spécifique sont utilisés pour annoncer la présence de l'équipement de téléphonie mobile de type unité distribuée et la présence de l'équipement de téléphonie mobile de type unité centralisée. Ainsi, des ressources sont préservées, particulièrement côté satellite, pour former une station de base avec l'équipement de téléphonie mobile de type unité distribuée et l'équipement de téléphonie mobile de type unité centralisée.

## Description

### DOMAINE TECHNIQUE

La présente invention concerne des annonces de présence d'équipements dans un réseau de téléphonie mobile déployé grâce à au moins un satellite.

### ETAT DE LA TECHNIQUE ANTERIEURE

Des satellites sont de plus en plus envisagés pour déployer des solutions de communication, et plus particulièrement dans le cadre de la téléphonie mobile de 5^{e} génération (5G) et au-delà.

Dans une constellation spatiale avec des équipements 5G embarqués, des équipements de type DU (« Distributed Unit » en anglais, « unité distribuée » en français) sont embarqués dans des satellites et des équipements de type CU (« Centralized Unit » en anglais, « unité centralisée » en français) sont positionnés à différents endroits au sol. Pour rappel, en technologie 5G, une station de base peut être décomposée en un équipement de type CU et un équipement, ou une multitude d'équipements, de type DU. L'équipement de type CU implémente les couches protocolaires hautes, telles que les couches relatives au protocole SDAP (« Service Data Adaptation Protocol » en anglais), au protocole PDCP (« Packet Data Convergence Protocol » en anglais) et au protocole RRC (« Radio Resource Control » en anglais). Et chaque équipement de type DU implémente de manière complémentaire les couches protocolaires basses, telles que les couches de contrôle de lien radio RLC (« Radio Link control » en anglais), MAC (« Medium Access Control » en anglais) et physique.

Permettre un routage de données efficace entre ces différentes entités demeure un sujet délicat. En effet, le routage doit être capable de prendre en charge l'ingénierie du trafic (« traffic engineering » en anglais) et aussi gérer les potentielles défaillances de liaisons satellite et/ou de nœuds (satellites), afin de réacheminer le trafic vers sa destination avec un impact limité, voire nul, en matière d'expérience utilisateur.

Dans les réseaux actuels des fournisseurs de service Internet, le routage par segments (« Segment Routing » en anglais) comme plan de données domine pour son caractère flexible, notamment en s'appuyant sur le standard MPLS (« Multiprotocol Label Switching »).

Cependant, ce routage par segment implique une utilisation de différentes piles protocolaires réseau, notamment le protocole BGP (« Border Gateway Protocol » en anglais) en parallèle d'IGP (« Interior Gateway Protocol » en anglais). A noter que, comme le protocole BGP circule sur le protocole de transport TCP (« Transmission Control Protocol » en anglais, de niveau 4 du modèle OSI (« Open Systems Interconnection » en anglais)), le protocole BGP est considéré comme appartenant à la couche application (niveau 7) du modèle OSI.

Or, dans une constellation spatiale où les ressources informatiques embarquées sont particulièrement limitées, l'utilisation de ces différentes piles protocolaires suffit à saturer lesdites ressources informatiques embarquées.

Il est alors souhaitable de pallier cet inconvénient de l'état de la technique. Il est notamment souhaitable de fournir une solution qui permette une utilisation efficace de ressources informatiques embarquées dans des satellites dans le cadre d'un routage par segments dans un réseau de téléphonie mobile déployé grâce auxdits satellites.

### EXPOSE DE L'INVENTION

A cet effet, il est proposé ici un procédé d'annonce dans le cadre d'un service de téléphonie mobile implémenté par un système de communication comportant un équipement satellite relié à un équipement au sol par un lien de communication satellite, l'équipement satellite incluant un premier routeur et un équipement de téléphonie mobile de type unité distribuée rattaché au premier routeur, l'équipement au sol incluant un deuxième routeur et un équipement de téléphonie mobile de type unité centralisée rattaché au deuxième routeur. Le procédé est tel que le premier routeur annonce la présence de l'équipement de téléphonie mobile de type unité distribuée et le deuxième routeur annonce la présence de l'équipement de téléphonie mobile de type unité centralisée en utilisant des messages d'annonce de couche réseau ou de couche liaison ayant un format « type-longueur-valeur » TLV qui comporte : un champ « type » ayant une valeur dédiée à l'annonce de présence d'équipement de téléphonie mobile de type unité distribuée ou de type unité centralisée ; un champ fournissant un identifiant le service de téléphonie mobile ; une information indiquant si le message en question concerne une annonce de présence d'équipement de téléphonie mobile de type unité distribuée ou si le message en question concerne une annonce de présence d'équipement de téléphonie mobile de type unité centralisée ; un champ fournissant une adresse de couche réseau du routeur transmettant le message d'annonce en question ; et un champ fournissant une adresse de couche réseau et/ou une adresse de couche liaison d'équipement de téléphonie mobile dont la présence est annoncée par le message d'annonce.

Ainsi, en plaçant ces messages d'annonce au niveau 2 (couche liaison) du modèle OSI ou au niveau 3 (couche réseau) du modèle OSI, le routage de paquets ou de segments dans le réseau de téléphonie mobile peut être aisément configuré sans avoir à disposer de conséquentes ressources informatiques, ce qui est particulièrement avantageux côté satellite.

Selon un mode de réalisation particulier, le message d'annonce qui annonce la présence de l'équipement de téléphonie mobile de type unité distribuée est transmis par le premier routeur lorsque le premier routeur détecte la présence de l'équipement de téléphonie mobile de type unité distribuée par le biais d'un dispositif d'interface de réseau local du premier routeur auquel est connecté l'équipement de téléphonie mobile de type unité distribuée au premier routeur, et le message d'annonce qui annonce la présence de l'équipement de téléphonie mobile de type unité centralisée est transmis par le deuxième routeur lorsque le deuxième routeur détecte la présence de l'équipement de téléphonie mobile de type unité centralisée par le biais d'un dispositif d'interface de réseau local du deuxième routeur auquel est connecté l'équipement de téléphonie mobile de type unité centralisée au deuxième routeur.

Selon un mode de réalisation particulier, chaque message d'annonce comporte un label, destiné à effectuer un routage entre routeurs par commutation de labels et qui est affecté par le routeur transmettant ledit message d'annonce.

Selon un mode de réalisation particulier, le premier routeur implémente une première table de service et le deuxième routeur implémente une deuxième table de service, à partir d'une détection de présence de l'équipement de téléphonie mobile de type unité distribuée ou centralisée qui leur sont respectivement rattachés et à partir de messages d'annonce reçus audit format « type-longueur-valeur » TLV, chaque dite table de service étant utilisée pour déterminer quel routeur joindre pour transmettre des données à tel ou tel équipement de de téléphonie mobile annoncé.

Selon un mode de réalisation particulier, le premier routeur effectue un filtrage qui rejette tout message d'annonce qui annonce la présence d'un équipement de téléphonie mobile de type unité distribuée.

Il est également proposé ici un système de communication destiné à être utilisé dans le cadre d'un service de téléphonie mobile, le système de communication comportant un équipement satellite relié à un équipement au sol par un lien de communication satellite, l'équipement satellite incluant un premier routeur et un équipement de téléphonie mobile de type unité distribuée rattaché au premier routeur, l'équipement au sol incluant un deuxième routeur et un équipement de téléphonie mobile de type unité centralisée rattaché au deuxième routeur. Le système est tel que le premier routeur est configuré pour annoncer la présence de l'équipement de téléphonie mobile de type unité distribuée et le deuxième routeur est configuré pour annoncer la présence de l'équipement de téléphonie mobile de type unité centralisée en utilisant des messages d'annonce de couche réseau ou de couche liaison ayant un format « type-longueur-valeur » TLV qui comporte : un champ « type » ayant une valeur dédiée à l'annonce de présence d'équipement de téléphonie mobile de type unité distribuée ou de type unité centralisée ; un champ fournissant un identifiant le service de téléphonie mobile ; une information indiquant si le message en question concerne une annonce de présence d'équipement de téléphonie mobile de type unité distribuée ou si le message en question concerne une annonce de présence d'équipement de téléphonie mobile de type unité centralisée ; un champ fournissant une adresse de couche réseau du routeur transmettant le message d'annonce en question ; et un champ fournissant une adresse de couche réseau et/ou une adresse de couche liaison de d'équipement de téléphonie mobile dont la présence est annoncée par le message d'annonce.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de communication satellite utilisé pour le déploiement d'un réseau de téléphonie mobile ;
[Fig. 2A] illustre schématiquement un format de message adapté pour annoncer la présence d'un équipement de téléphonie mobile de type DU ou CU, selon un premier mode de réalisation ;
[Fig. 2B] illustre schématiquement un format de message adapté pour annoncer la présence d'un équipement de téléphonie mobile de type DU ou CU, selon un deuxième mode de réalisation ;
[Fig. 3] illustre schématiquement un format de champ de drapeaux, applicable aux messages des Figs. 2A et 2B ;
[Fig. 4A] illustre schématiquement une première table de service implémentée par un routeur du côté satellite dans le système de communication satellite ;
[Fig. 4B] illustre schématiquement une deuxième table de service implémentée par un routeur du côté sol dans le système de communication satellite ;
[Fig. 5A] illustre schématiquement un algorithme d'annonce de présence d'équipement de type DU par le routeur du côté satellite dans le système de communication satellite ;
[Fig. 5B] illustre schématiquement un algorithme d'annonce de présence d'équipement de type CU faite par le routeur du côté sol dans le système de communication satellite ;
[Fig. 5C] illustre schématiquement un algorithme de mise à jour de table service sur réception d'une annonce de présence d'équipement de type DU ou CU par un routeur connecté à un équipement de téléphonie mobile de type DU ;
[Fig. 5D] illustre schématiquement un algorithme de mise à jour de table service sur réception d'une annonce de présence d'équipement de type DU ou CU par un routeur connecté à un équipement de téléphonie mobile de type CU ; et
[Fig. 6] illustre schématiquement une plateforme matérielle utilisable pour implémenter des équipements du système de communication satellite.

### EXPOSE DETAILLE DE MODES DE REALISATION

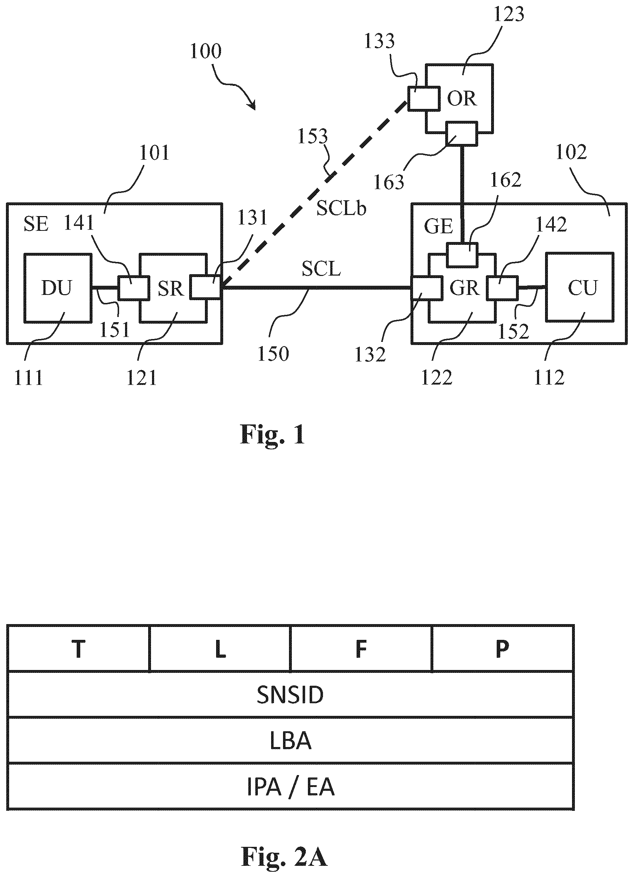

La **Fig. 1** illustre schématiquement un système de communication satellite 100 utilisé pour le déploiement d'un réseau de téléphonie mobile.

Dans un satellite, un équipement satellite SE 101 est embarqué. L'équipement satellite SE 101 inclut un routeur, appelé ici routeur satellite SR 121.

Au sol, un équipement au sol GE 102 est en communication avec l'équipement satellite SE 101 grâce à un lien de communication satellite SCL 150. L'équipement au sol GE 102 inclut un routeur, appelé ici routeur au sol GR 122.

Le routeur satellite SR 121 inclut un dispositif d'interface de communication satellite 131 adapté et configuré pour communiquer via le lien de communication satellite SCL 150. Le routeur satellite SR 121 inclut en outre un dispositif d'interface de communication de type LAN (« Local Area Network » en anglais) 141 adapté et configuré pour communiquer, via un lien de communication 151, avec un équipement de téléphonie mobile de type DU (« Distributed Unit » en anglais) 111.

Le routeur satellite SR 121 sait, par configuration, être connecté à un équipement de téléphonie mobile de type DU (équipement DU 111), et être donc un routeur embarqué dans un satellite. Dans un mode de réalisation particulier, le routeur satellite SR 121 a reçu une commande, par exemple appelée *« service-node-sid-du »,* lui indiquant : (1) qu'un équipement de téléphonie mobile de type DU est destiné à lui être connecté, (2) que cet équipement de téléphonie mobile de type DU a tel identifiant (un numéro de série et/ou une adresse MAC), et (3) que cet équipement de téléphonie mobile de type DU va être utilisé dans un service de téléphonie mobile ayant tel identifiant (identifiant SNSID par la suite).

Le routeur au sol GR 122 inclut un dispositif d'interface de communication satellite 132 adapté et configuré pour communiquer via le lien de communication satellite SCL 150. Le routeur au sol GR 122 inclut en outre un dispositif d'interface de communication de type LAN 142 adapté et configuré pour communiquer, via un lien de communication 152, avec un équipement de téléphonie mobile de type CU (« Centralized Unit » en anglais) 112. Le routeur au sol GR 122 inclut en outre un dispositif d'interface inter-routeurs 162 adapté et configuré pour communiquer avec au moins un autre routeur OR 123 dans le cadre d'un réseau de communication supportant le routage de paquets de données pour le réseau de téléphonie mobile.

Le routeur au sol GR 122 sait, par configuration, être connecté à un équipement de téléphonie mobile de type CU (équipement CU 112) et être donc un routeur au sol. Dans un mode de réalisation particulier, le routeur au sol GR 122 a reçu une commande, par exemple appelée *« service-node-sid-cu »,* lui indiquant : (1) qu'un équipement de téléphonie mobile de type CU est destiné à lui être connecté, (2) que cet équipement de téléphonie mobile de type CU a tel identifiant, et (3) que cet équipement de téléphonie mobile de type CU va être utilisé dans un service de téléphonie mobile ayant tel identifiant (identifiant SNSID par la suite).

La Fig. 1 présente donc un autre routeur OR 123, qui lui-même peut être connecté à un ou plusieurs routeurs supplémentaires du réseau de communication supportant le routage de paquets de données pour le réseau de téléphonie mobile. Le routeur OR 123 comporte ainsi un dispositif d'interface inter-routeurs 163 adapté et configuré pour communiquer le routeur au sol GR 122 et avec le ou les routeurs supplémentaires (non représentés).

Les dispositifs d'interface inter-routeurs 162, 163 peuvent supporter plusieurs interfaces logiques sur une même interface physique pour créer des liens de communication avec plusieurs routeurs du réseau de communication supportant le routage de paquets de données pour le réseau de téléphonie mobile.

Dans un mode de réalisation particulier, le routeur OR 123, au sol, inclut un dispositif d'interface de communication satellite 133 adapté et configuré pour établir un lien de communication satellite alternatif SCLb 153 avec l'équipement satellite SE 101. Le lien de communication satellite alternatif SCLb 153 permet de suppléer le lien de communication satellite SCL 150 en cas de défaillance de ce dernier (e.g., survenue de conditions météorologiques défavorables au voisinage de l'équipement au sol GE 102). Le routage de paquets entre l'équipement CU 112 et l'équipement DU 111 peut ainsi être maintenu, par l'intermédiaire du routeur OR 123.

Conjointement, l'équipement CU 112 et l'équipement DU 111 forment une station de base d'un réseau de téléphonie mobile.

Afin de conjointement former la station de base d'un réseau de téléphonie mobile, l'équipement CU 112 et l'équipement DU 111 doivent être annoncés, afin que le routage de données entre l'équipement CU 112 et l'équipement DU 111 puisse prendre place, et s'adapter à des changements de conditions de communication. Pour ce faire, leurs routeurs respectifs SR 121 et GR 122 génèrent et émettent des messages d'annonce dans un format spécifique d'un protocole de niveau 2 (couche liaison) du modèle OSI ou de niveau 3 (couche réseau) du modèle OSI. Ainsi, ces messages d'annonce ont un format « type-longueur valeur » TLV, de ce protocole de niveau 2 (couche liaison) du modèle OSI ou de niveau 3 (couche réseau) du modèle OSI, dédié à l'annonce de présence d'équipement de téléphonie mobile.

Préférentiellement, les routeurs SR 121 et GR 122 génèrent et émettent ces messages d'annonce dans un format spécifique d'un protocole de niveau 3 (couche réseau) du modèle OSI.

Ainsi, en plaçant ces messages d'annonce au niveau 2 (couche liaison) du modèle OSI ou au niveau 3 (couche réseau) du modèle OSI, le routage de paquets ou de segments dans le réseau de téléphonie mobile, entre l'équipement CU 112 et l'équipement DU 111, peut être aisément configuré sans avoir à disposer de conséquentes ressources informatiques, ce qui est particulièrement avantageux côté satellite. Cet avantage ne pourrait pas être atteint avec des annonces réalisées par le biais d'un protocole tel que BGP, à cause du traitement des différents entêtes induits par l'utilisation d'un protocole de niveau 7 (couche application) du modèle OSI.

La Fig. 2A illustre schématiquement un format « type-longueur valeur » TLV, adapté pour annoncer la présence d'un équipement de téléphonie mobile de type DU ou CU, selon un premier mode de réalisation.

Le format de message schématiquement illustré par la Fig. 2A comporte :
- un champ T fournissant une information de type de message (par exemple, sur 8 bits) ;
- un champ L fournissant une information de longueur de message (par exemple, sur 8 bits) ;
- un champ F fournissant un ensemble de drapeaux (par exemple, sur 8 bits) ;
- un éventuel champ P de données de bourrage (« padding » en anglais) afin de réaliser un alignement des champs T, L, F et P sur un nombre de bits prédéfinis (par exemple, sur 32 bits) ;
- un champ SNSID (« Service Node Segment Identifier » en anglais) fournissant un identifiant de service ;
- un champ LBA (« LoopBack Address » en anglais), fournissant une adresse de rebouclage, qui identifie le routeur ayant transmis le message en question ; et
- un champ IPA / EA (« Internet Protocol Address » / « Ethernet Address », en anglais) fournissant une adresse de niveau 3 (couche réseau) du modèle OSI (par exemple, une adresse IP), ou respectivement de niveau 2 (couche liaison) du modèle OSI de l'équipement de téléphonie mobile de type DU ou CU annoncé (par exemple, une adresse IPv4 sur 32 bits ou une adresse IPv6 sur 128 bits).

Pour annoncer la présence d'un équipement de téléphonie mobile de type DU ou CU, le champ T prend une valeur dédiée. Par exemple, le champ T prend une valeur spécifiquement allouée par l'IANA (« Internet Assigned Numbers Authority » en anglais) pour l'annonce, au niveau 3 du modèle OSI, de la présence d'un équipement de téléphonie mobile de type DU ou CU.

Le champ F inclut une information indiquant si le message concerne une annonce de présence d'un équipement de téléphonie mobile de type DU ou si le message concerne une annonce de présence d'un équipement de téléphonie mobile de type CU.

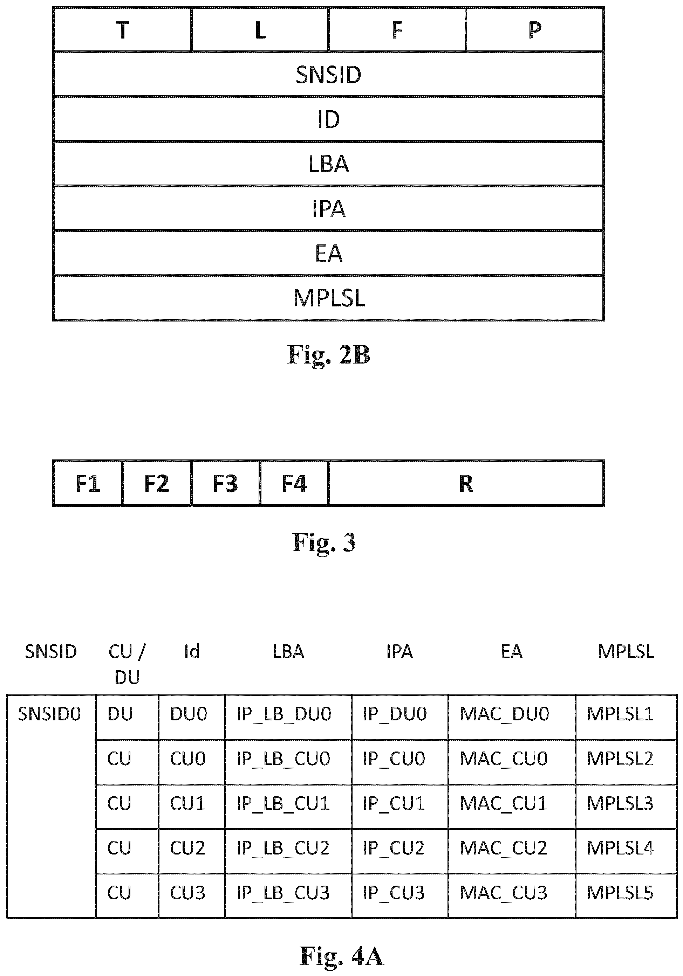

Le champ F inclut potentiellement d'autres informations. Dans un mode de réalisation particulier, comme schématiquement illustré sur la Fig. 3, le champ F inclut (1 bit par drapeau) :
- un drapeau F1, qui indique la présence d'un champ de type SNSID ;
- un drapeau F2, qui indique, en cas de protocole de niveau 3 (couche réseau) du modèle OSI, si l'adresse fournie dans le champ IPA de la Fig. 2A est une adresse de type IPv4 ou si c'est une adresse IPv6. Par exemple, le drapeau F2 prend la valeur « 0 » si l'adresse fournie dans le champ IPA est une adresse IPv4 et le drapeau F2 prend la valeur « 1 » si l'adresse IP fournie dans le champ IPA est une adresse IPv6 ;
- un drapeau F3, utilisé dans le cas du format de message de la Fig. 2B, qui indique si l'adresse de niveau 3 (couche réseau) du modèle OSI fournie dans un champ IPA est complétée par une adresse de niveau 2 (couche liaison) du modèle OSI dans un champ supplémentaire EA. Par exemple, le drapeau F3 prend la valeur « 0 » lorsque le champ EA est absent, et le drapeau F3 prend la valeur « 1 » lorsque le champ EA est présent et qu'il contient l'adresse de niveau 2 (couche liaison) du modèle OSI (e.g., adresse MAC) en question (voir Fig. 2B) ;
- un drapeau F4, qui est ladite information indiquant si le message concerne une annonce de présence d'un équipement de téléphonie mobile de type DU ou si le message concerne une annonce de présence d'un équipement de téléphonie mobile de type CU. Par exemple, le drapeau F4 prend la valeur « 0 » lorsque le message concerne une annonce de présence d'un équipement de téléphonie mobile de type CU, et le drapeau F4 prend la valeur « 1 » lorsque le message concerne une annonce de présence d'un équipement de téléphonie mobile de type DU.

De retour à la Fig. 2A, le champ SNSID est destiné à indiquer un identifiant SNSID, qui identifie le service pour lequel l'annonce est réalisée. Les identifiants SNSID sont préétablis, et chaque opérateur de réseau de téléphonie mobile utilise typiquement des identifiants SNSID distincts qui leur sont propres. Plusieurs services de téléphonie mobiles, opérés par différents opérateurs de réseau de téléphonie mobile, peuvent ainsi coexister dans une constellation de satellites. Ainsi, pour chaque station de base, l'équipement de téléphonie mobile de type CU et l'équipement de téléphonie mobile de type DU qui forment ladite station de base utilisent une même valeur d'identifiant SNSID. A noter que d'autres valeurs d'identifiant SNSID pourraient aussi être affectées à d'autres services que des services de téléphonie mobile, comme par exemple des services de maintenance satellite.

L'adresse de rebouclage, fournie dans le champ LBA, permet notamment d'éviter de réaliser des boucles de diffusion. En effet, un routeur qui reçoit un message d'annonce pour un équipement de téléphonie mobile de type DU ou CU auquel il est lui-même rattaché doit ignorer le message d'annonce en question. De plus, l'adresse de rebouclage, fournie dans le champ LBA, est utilisée par chaque autre routeur pour savoir à quel routeur l'équipement de téléphonie mobile de type DU ou CU est rattaché, et déterminer, grâce à sa table de routage, comment propager les paquets qui sont adressés à l'équipement de téléphonie mobile de type DU ou CU en question.

L'adresse de niveau 3 (couche réseau) du modèle OSI, ou de niveau 2 (couche liaison) du modèle OSI, dans le champ IPA / EA, permet d'identifier l'équipement de téléphonie mobile de type CU ou DU concerné par l'annonce. Cela dépend de quel type d'adresse est utilisé pour adresser les équipements de téléphonie mobile de type CU ou DU dans le réseau de téléphonie mobile.

La Fig. 2B illustre schématiquement un format de message en variante de la Fig. 2A. Le format de message de la Fig. 2B est plus complet. Un ou plusieurs champs montrés sur la

Fig. 2B qui ne sont pas sur la Fig. 2A peuvent être ajoutés pour offrir plus d'informations à un routeur qui reçoit l'annonce correspondante, et permettre ainsi d'implémenter plus de fonctionnalités.

Notamment, la Fig. 2B montre un mode de réalisation particulier où le format de message présenté inclut en outre un champ ID fournissant un identifiant, par exemple sur 32 bits, de l'équipement de téléphonie mobile de type DU ou CU concerné.

De plus, sur la Fig. 2B, une adresse de niveau 3 (couche réseau) du modèle OSI est incluse dans le champ IPA et une adresse de niveau 2 (couche liaison) du modèle OSI est incluse dans le champ EA.

Aussi, la Fig. 2B montre un mode de réalisation particulier où le format de message présenté inclut en outre un champ MPLSL (« MPLS Label » en anglais), fournissant un label. Un label est un identifiant de flux de paquets, pour un service donné (identifié par l'identifiant SNSD), qui émane d'un équipement de téléphonie mobile de type DU ou CU associé au service en question. Le label est généré de manière aléatoire ou pseudo-aléatoire par le routeur auquel est attaché l'équipement de téléphonie mobile de type DU ou CU considéré. C'est un mécanisme bien connu, destiné à effectuer un routage entre routeurs par commutation de labels, permettant d'effectuer un routage par segments qui facilite les changements dynamiques de route entre routeurs, sans interruption de service de routage (par exemple, lorsque la communication entre le sol et le satellite bascule depuis le lien de communication satellite SCL 150 et le lien de communication satellite alternatif SCLb 153).

Il ressort de ce qui précède que le format de message présenté en relation avec la Fig. 2A ou 2B est applicable à des protocoles de niveau 3 (couche réseau) du modèle OSI comme à des protocoles de niveau 2 (couche liaison) du modèle OSI. Le format de message présenté à la Fig. 2A ou 2B est ainsi compatible avec le protocole de routage OSPF (« Open Shortest Path First » en anglais), qui est un protocole de niveau 3 du modèle OSI (couche réseau). Le format de message présenté à la Fig. 2A ou 2B est aussi compatible avec le protocole de routage IS-IS (« Intermediate System to Intermediate System » en anglais), qui est un protocole de niveau 2 du modèle OSI (couche liaison).

Ainsi, grâce au format de message présenté en relation avec la Fig. 2A ou 2B, un équipement de téléphonie mobile de type DU ou CU peut être efficacement annoncé sans avoir recours à une pile protocolaire remontant jusqu'au niveau 7 (couche application) du modèle OSI, comme avec le protocole BGP susmentionné. Les ressources informatiques nécessaires pour traiter les annonces permettant de mettre en correspondance l'équipement DU 111 avec l'équipement CU 112 sont ainsi réduites.

Les messages d'annonce, selon le format exposé ci-dessus, sont propagés entre les routeurs, et les informations qu'ils contiennent sont répertoriées dans des tables de service qui viennent compléter des tables de routage déjà classiquement présentes dans les routeurs, et ce, spécifiquement pour la mise en relation des équipements de téléphonie mobile de type DU et CU.

La **Fig. 4A** illustre schématiquement une première table de service implémentée par le routeur SR 121. La table de service est mise à jour par découverte ou confirmation de la présence d'équipements de téléphonie mobile de type DU ou CU, pour un service (identifié par son identifiant SNSID) préconfiguré.

Dans un mode de réalisation particulier, l'équipement DU 111 annonce sa présence au routeur SR 121 en envoyant un message de type « ARP Gratuitous » (où ARP est l'acronyme de « Address Resolution Protocol » en anglais). Un message de type « ARP Gratuitous » est un message conforme au protocole ARP qui n'a pas été déclenché par une demande antérieure. Le message de type « ARP Gratuitous » est envoyé par diffusion (« broadcast » en anglais) par un nœud de réseau de communication, de sorte que ce nœud de réseau de communication annonce de manière spontanée par ce biais sa correspondance adresse IP - adresse MAC à l'ensemble du réseau de communication en question. L'équipement DU 111 peut faire ainsi à intervalles réguliers. Le routeur SR 121 peut alors s'appuyer sur les messages de type « ARP Gratuitous » transmis par l'équipement DU 111, et reçus par le routeur SR 121 grâce à leur transmission par diffusion, afin d'enrichir la première table de service. Le routeur SR 121 stocke typiquement les informations contenues des messages transmis selon le protocole ARP dans une table dédiée, appelée « table ARP ». Par exemple, le routeur SR 121 a appris l'adresse MAC de l'équipement DU 111 grâce à la commande *« service-node-sid-du »* déjà mentionnée.

Il convient de noter que l'utilisation du protocole ARP s'appuie sur des adresses IP de type IPv4. Un fonctionnement identique serait toutefois obtenu avec des adresses IP de type IPv6 et l'emploi du protocole NDP (« Neighbor Discovery Protocol » en français).

Le routeur SR 121 va aussi utiliser le contenu de messages d'annonce de la présence d'équipements de téléphonie mobile de type CU ou DU, reçus par le routeur SR 121, pour le même service que celui pour lequel le routeur SR 121 a été configuré (e.g., par la commande *« service-node-sid-du »*).

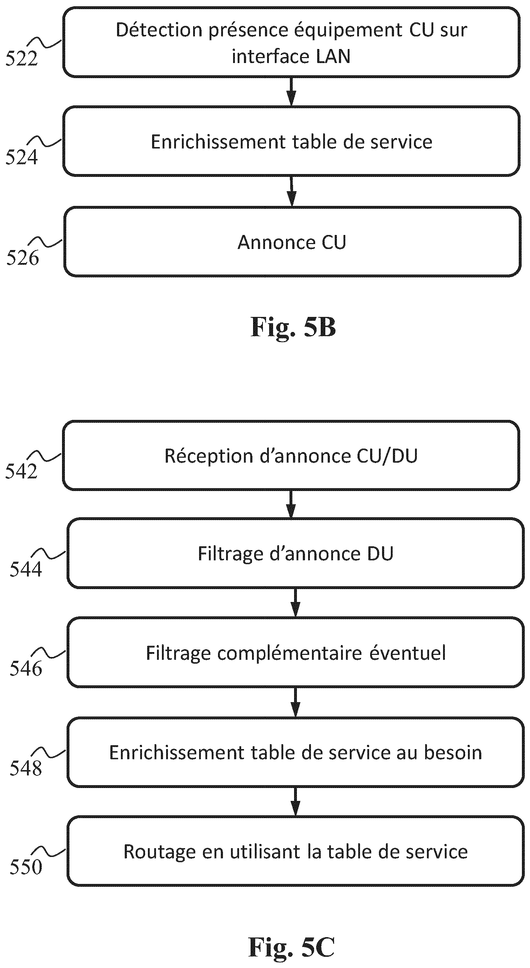

Préférentiellement, comme décrit ci-après en relation avec la Fig. 5C, le routeur SR 121 ne tient pas compte de messages d'annonce de la présence d'équipements de téléphonie mobile de type DU, qui seraient reçus par le routeur SR 121 en provenance d'autres routeurs.

Chaque ligne de la première table de service correspond à une description d'un équipement de téléphonie mobile de type DU ou CU dont la présence a été répertoriée par le routeur SR 121. Chaque ligne reprend les informations contenues dans le format « type-longueur-valeur » (voir Figs. 2A et 2B) d'un message d'annonce, soit tel que reçu, soit tel que transmis.

Ainsi, dans un mode de réalisation particulier, la première table de service comporte les colonnes suivantes :
- une colonne, libellée SNSID sur la Fig. 4A, qui identifie le service pour lequel le routeur SR 121 a été configuré (comme déjà indiqué, le routeur SR 121 peut aussi être amené à gérer plusieurs services en parallèle (téléphonie mobile, maintenance satellite...)) ;
- une colonne, libellée DU/CU sur la Fig. 4A, qui indique si la ligne considérée de la table de service décrit un dit équipement de téléphonie mobile de type DU ou un dit équipement de téléphonie mobile de type CU ;
- une colonne, libellée Id sur la Fig. 4A, qui fournit optionnellement un identifiant de type numéro de série de l'équipement de téléphonie mobile de type DU ou CU en question ;
- une colonne, libellée LBA sur la Fig. 4A, qui fournit une adresse de niveau 3 du modèle OSI (typiquement une adresse IP) du routeur associé à l'équipement de téléphonie mobile de type DU ou CU en question (« adresse de rebouclage ») ;
- une colonne, libellée MPLSL sur la Fig. 4A, qui fournit optionnellement une valeur de label qui a été attribuée pour le flux de paquets émis par l'équipement de téléphonie mobile de type DU ou CU en question ;
et en outre, l'une et/ou l'autre des colonnes suivantes :
- une colonne, libellée IPA sur la Fig. 4A, qui fournit une adresse de niveau 3 du modèle OSI (typiquement une adresse IP) de l'équipement de téléphonie mobile de type DU ou CU en question ; et
- une colonne, libellée EA sur la Fig. 4A, qui fournit une adresse Ethernet (MAC, donc de niveau 2 du modèle OSI) de l'équipement de téléphonie mobile de type DU ou CU en question.

Comme montré sur la Fig. 4A, plusieurs équipements de téléphonie mobile de type CU peuvent être associés à un même service (même identifiant SNSID), typiquement lorsque ces équipements de téléphonie mobile de type CU appartiennent à un même opérateur de téléphonie mobile.

Ainsi, de manière illustrative sur la Fig. 4A, pour un service de téléphonie mobile identifié par SNSID0 (fourni au routeur SR 121 par configuration), la première table de service décrit un unique équipement de téléphonie mobile de type DU (identifié par DU0), avec une adresse de niveau 3 (couche réseau) IP_DU0 et une adresse de niveau 2 (couche liaison) MAC_DU0, auquel est en outre associée une valeur de label MPLSL1. La ligne correspondante de la première table de service inclut aussi l'adresse de niveau 3 (couche réseau, typiquement l'adresse IP) du routeur auquel est rattaché l'équipement de téléphonie mobile de type DU en question.

Dans le cadre de la Fig. 1, cet équipement de téléphonie mobile qui est identifié par DU0 sur la Fig. 4A est l'équipement DU 111, et l'adresse IP_LB_DU0 est l'adresse de niveau 3 (couche réseau) du routeur SR 121.

Ensuite, l'exemple de première table de service de la Fig. 4A liste, pour le service identifié par SNSID0, quatre équipements de téléphonie mobile de type CU (identifiés par CU0 à CU3), avec leurs adresses de niveau 3 (couche réseau) respectives IP_CU0 à IP_CU3 et leurs adresses de niveau 2 (couche liaison) respectives MAC_DU0 à MAC_DU3, auxquels sont en outre associées des valeurs de label MPLSL2 à MPLSL5. De plus, pour chacun de ces équipements de téléphonie mobile de type CU, la première table de service indique aussi l'adresse de niveau 3 (couche réseau, typiquement l'adresse IP) du routeur auquel est rattaché l'équipement de téléphonie mobile de type CU en question (adresses IP_LB_CU0 à IP_LB_CU3).

Dans le cadre de la Fig. 1, par exemple, l'équipement de téléphonie mobile identifié par CU0 sur la Fig. 4A est l'équipement CU 112, et l'adresse IP_LB_CU0 est l'adresse de niveau 3 (couche réseau) du routeur GR 122.

Ainsi, la première table de service, qui est implémentée par le routeur côté satellite SR 121, identifie l'équipement de téléphonie mobile de type DU qui est embarqué sur le satellite (équipement DU 111), ainsi que chaque équipement de téléphonie mobile de type CU qui a été annoncé auprès du routeur côté satellite SR 121 et avec lequel l'équipement de téléphonie mobile de type DU est susceptible d'être interconnecté grâce au lien de communication satellite SCL 150 (y compris l'équipement CU 112).

La première table de service est ainsi construite par le routeur SR 121, d'après sa détection de la présence de l'équipement DU 111 (DU0 dans la première table de service de la Fig. 4A) et des annonces reçues en provenance d'autres routeurs.

La première table de service de la Fig. 4A ne contient pas de description d'autres équipements de téléphonie mobile de type DU que celui rattaché au routeur SR 121 car, dans un mode de réalisation particulier, le routeur SR 121 opère un filtrage qui rejette les messages d'annonce de présence d'équipement de réseau de téléphonie de type DU en provenance d'autres routeurs. Les communications directes entre équipements de réseau de téléphonie de type DU ne sont en effet pas utiles dans un tel réseau de téléphonie mobile, et ce filtrage permet d'améliorer la consommation mémoire du côté satellite.

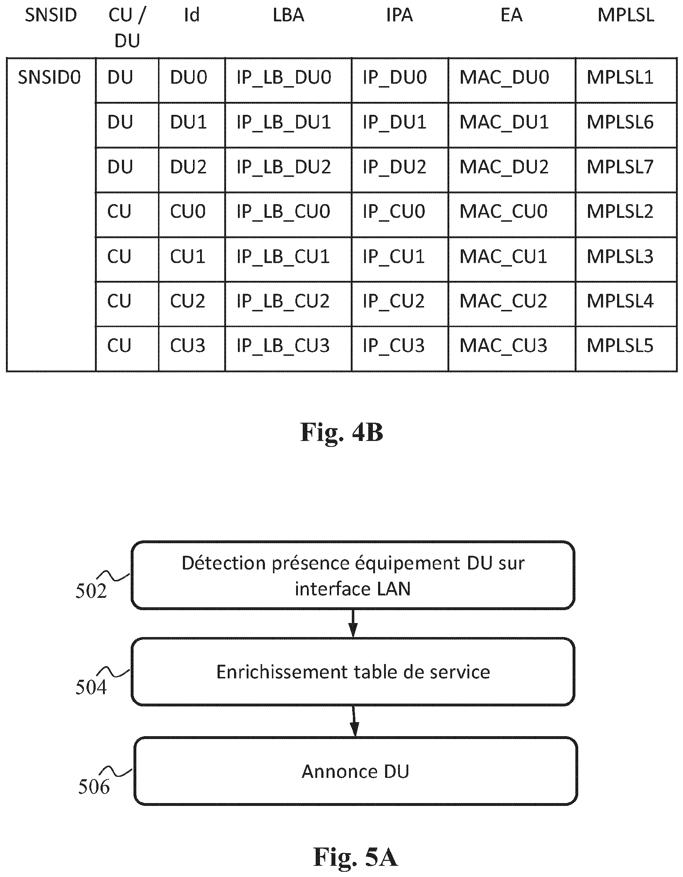

Une deuxième table de service, schématiquement illustrée par la Fig. 4B, est implémentée par le routeur GR 122. La table de service est mise à jour par découverte ou confirmation de la présence d'équipements de téléphonie mobile de type DU ou CU, pour un service (identifié par son identifiant SNSID) préconfiguré.

Dans un mode de réalisation particulier, l'équipement CU 112 annonce sa présence en envoyant un message de type « ARP Gratuitous ». L'équipement CU 112 peut faire ainsi à intervalles réguliers. Le routeur GR 122 peut alors s'appuyer sur les messages de type « ARP Gratuitous » transmis par l'équipement CU 112, et reçus par le routeur GR 122 grâce à leur transmission par diffusion, afin d'enrichir la deuxième table de service. Le routeur GR 122 stocke typiquement les informations contenues des messages transmis selon le protocole ARP dans la table ARP. Par exemple, le routeur GR 122 a appris l'adresse MAC de l'équipement CU 112 grâce à la commande *« service-node-sid-cu »* déjà mentionnée.

La Fig. 4B montre un exemple en accord avec celui de la Fig. 4A. Ainsi, la deuxième table de service comporte les mêmes colonnes que la première table de service.

Outre les entrées qui se trouvent dans la première table de service de la Fig. 4A, la deuxième table de service de la Fig. 4B inclut des entrées concernant d'autres équipements de réseau de téléphonie de type DU qui ont aussi été annoncés pour le même service identifié par l'identifiant SNSID0 et qui sont localisés typiquement dans d'autres satellites de la constellation. A ce titre, la deuxième table de service de la Fig. 4B décrit donc un autre équipement de réseau de téléphonie de type DU, identifié par l'identifiant DU1, avec une adresse de niveau 3 (couche réseau, typiquement l'adresse IP) IP_DU1 et une adresse de niveau 2 (couche liaison) MAC_DU1, auquel est en outre associée une valeur de label MPLSL6. La ligne correspondante de la deuxième table de service inclut aussi l'adresse de niveau 3 (couche réseau, typiquement l'adresse IP) du routeur auquel est rattaché l'équipement de téléphonie mobile de type DU en question (IP_LP_DU1). La deuxième table de service de la Fig. 4B décrit encore un autre équipement de réseau de téléphonie de type DU, identifié par l'identifiant DU2, avec une adresse de niveau 3 (couche réseau, typiquement l'adresse IP) IP_DU2 et une adresse de niveau 2 (couche liaison) MAC_DU2, auquel est en outre associée une valeur de label MPLSL7. La ligne correspondante de la deuxième table de service inclut aussi l'adresse de niveau 3 (couche réseau, typiquement l'adresse IP) du routeur auquel est rattaché l'équipement de téléphonie mobile de type DU en question (IP_LP_DU2).

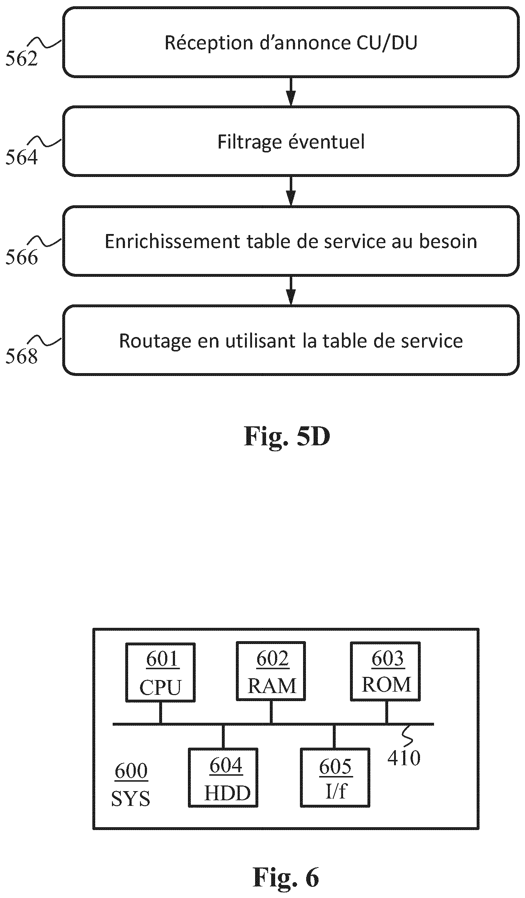

Comme expliqué ci-après, les tables de service sont utilisées par les routeurs pour réaliser le routage de données, comme décrit ci-après avec les Figs. 5C et 5D.

La **Fig. 5A** illustre schématiquement un algorithme d'annonce de présence d'un équipement de téléphonie mobile de type DU par le routeur auquel il est rattaché. La Fig. 5A est plus particulièrement décrite ci-après dans le cadre de l'annonce de la présence de l'équipement DU 111 par le routeur SR 121.

Dans une étape 502, le routeur SR 121 détecte la présence (e.g., activation) de l'équipement DU 111 connecté au travers de son dispositif d'interface de communication de type LAN 141.

Par exemple, le routeur SR 121 détecte la présence (e.g., activation) de l'équipement DU 111 en trouvant une correspondance de l'équipement DU 111 dans la table ARP suite à l'envoi par l'équipement DU 111 d'un message de type « ARP Gratuitous ». Le routeur SR 121 récupère alors des informations d'adresse de niveau 3 (*e.g.,* adresse IP) de l'équipement DU 111 contenues dans la table ARP en correspondance avec son adresse de niveau 2 (MAC) connue du routeur SR 121 par configuration préalable. En variante, le routeur SR 121 détecte la présence (e.g., activation) de l'équipement DU 111 suite à la réception d'un message en provenance de l'équipement DU 111, dans lequel l'équipement DU 111 s'identifie.

Dans une étape 504, le routeur SR 121 enrichit en conséquence la première table de service, en remplissant les colonnes, pour l'entrée correspondante, comme montré ci-dessus en relation avec la Fig. 4A pour l'équipement identifié par l'identifiant DU0. Le routeur SR 121 complète ainsi la première table de service, pour cette entrée dédiée à l'équipement DU 111, avec l'identifiant de service SNSID connu par configuration préalable et une valeur de label MPLSL. Le routeur SR 121 attribue, préférentiellement de manière aléatoire ou pseudo-aléatoire, cette valeur de label MPLSL

Dans une étape 506, le routeur SR 121 génère et transmet un message d'annonce de la présence de l'équipement DU 111 pour le service identifié par l'identifiant SNSID. Le message d'annonce a le format tel que précédemment décrit, incluant notamment la valeur de type (champ T) qui correspond à ce type de message (annonce), l'identifiant SNSID (champ SNSID), une indication que l'annonce concerne un équipement de téléphonie mobile de type DU (drapeau F4), l'adresse de niveau 3 (couche réseau) du routeur SR 121 (adresse de rebouclage), et la valeur de label attribué (champ MPLSL) ainsi qu'au moins une adresse de l'équipement DU 111 (champ IA et/ou EA).

La transmission de ce message d'annonce de la présence de l'équipement DU 111 va permettre à d'autres routeurs, y compris le routeur GR 122, de mettre à jour leurs tables de service respectives (comme illustré sur la Fig. 4B) vis-à-vis de l'équipement DU 111, comme décrit ci-après en relation avec la Fig. 5C.

La **Fig. 5B** illustre schématiquement un algorithme d'annonce de présence d'un équipement de téléphonie mobile de type CU par le routeur auquel il est rattaché. La Fig. 5B est plus particulièrement décrite ci-après dans le cadre de l'annonce de la présence de l'équipement CU 112 par le routeur GR 122.

Dans une étape 522, le routeur GR 122 détecte la présence (e.g., activation) de l'équipement CU 112 connecté au travers de son dispositif d'interface de communication de type LAN 142.

Par exemple, le routeur GR 122 détecte la présence (*e*.*g*., activation) de l'équipement CU 112 en trouvant une correspondance de l'équipement CU 112 dans la table ARP suite à l'envoi par l'équipement CU 112 d'un message de type « ARP Gratuitous ». Le routeur GR 122 récupère alors des informations d'adresse de niveau 3 (*e.g.,* adresse IP) de l'équipement CU 112 contenues dans la table ARP en correspondance avec son adresse de niveau 2 (MAC) connue du routeur GR 122 par configuration préalable. En variante, le routeur GR 122 détecte la présence (*e*.*g*., activation) de l'équipement CU 112 suite à la réception d'un message en provenance de l'équipement CU 112, dans lequel l'équipement DU 112 s'identifie.

Dans une étape 524, le routeur GR 122 enrichit en conséquence la deuxième table de service, en remplissant les colonnes, pour l'entrée correspondante, comme montré ci-dessus en relation avec la Fig. 4B pour l'équipement identifié par l'identifiant CU0. Le routeur GR 122 complète ainsi la deuxième table de service, pour cette entrée dédiée à l'équipement CU 112, avec l'identifiant de service SNSID connu par configuration préalable et une valeur de label MPLSL. Le routeur GR 122 attribue, préférentiellement de manière aléatoire ou pseudo-aléatoire, cette valeur de label MPLSL.

Dans une étape 526, le routeur GR 122 génère et transmet un message d'annonce de la présence de l'équipement CU 112 pour le service identifié par l'identifiant SNSID. Le message d'annonce a le format tel que précédemment décrit, incluant notamment la valeur de type (champ T) qui correspond à ce type de message (annonce), l'identifiant SNSID (champ SNSID), une indication que l'annonce concerne un équipement de téléphonie mobile de type CU (drapeau F4), l'adresse de niveau 3 (couche réseau) du routeur GR 122 (adresse de rebouclage), et la valeur de label attribué (champ MPLSL) ainsi qu'au moins une adresse de l'équipement CU 112 (champ IA et/ou EA).

La transmission de ce message d'annonce de la présence de l'équipement CU 112 va permettre à d'autres routeurs, y compris le routeur SR 121, de mettre à jour leurs tables de service respectives (comme illustré sur les Figs. 4A et 4B) vis-à-vis de l'équipement CU 112, comme décrit ci-après en relation avec la Fig. 5D.

Si un routeur ne connaît pas le type dédié aux annonces d'équipements de téléphonie mobile de type DU ou CU comme exposé ci-dessus, ce routeur n'effectue pas d'autre traitement en réception d'un message de ce type que de propager ledit message à destination d'autres routeurs qui lui sont connectés.

La **Fig. 5C** illustre schématiquement un algorithme de traitement de message d'annonce de présence de d'équipement de téléphonie mobile de type CU ou DU par un routeur connecté à un équipement de téléphonie mobile de type DU (tel que le routeur SR 121).

Dans une étape 542, le routeur en question reçoit un message d'annonce de présence de d'équipement de téléphonie mobile de type CU ou DU. Le message d'annonce est un message de niveau 3 (couche réseau) du modèle OSI ou de niveau 2 (couche liaison) du modèle OSI (de préférence, de niveau 3 du modèle OSI), et a le format « type-longueur-valeur » tel que décrit ci-dessus.

Dans une étape 544, le routeur en question opère préférentiellement un filtrage qui rejette tout message d'annonce de présence d'équipement de téléphonie mobile de type DU.

Dans une étape 546, le routeur en question opère un filtrage complémentaire éventuel qui rejette le message d'annonce de présence d'équipement de téléphonie mobile de type CU ou DU.

Le routeur rejette tout message d'annonce de présence d'équipement de téléphonie mobile de type CU ou DU dont le routeur en question aurait été à l'origine (et qu'un autre routeur lui aurait propagé).

Le routeur rejette tout message d'annonce de présence d'équipement de téléphonie mobile de type CU ou DU pour un service, identifié par un identifiant SNSID, qui n'est pas inclus dans sa table de service.

Les filtrages des étapes 544 et 546 peuvent être réalisés dans un ordre différent de celui exposé ci-dessus.

Dans une étape 548, le routeur en question enrichit sa table de service (première table de service) au besoin, c'est-à-dire en fonction du filtrage éventuellement réalisé à l'étape 544 et à l'étape 546. Le routeur en question utilise pour ce faire les informations contenues dans le message reçu à l'étape 542.

Dans une étape 550, le routeur en question utilise la table service ainsi enrichie pour réaliser du routage de données.

Lorsque le routeur reçoit des données concernant un service dont l'identifiant SNSID n'est pas répertorié dans sa table de service, le routeur en question jette les données reçues.

Lorsque le routeur reçoit des données en provenance de l'équipement de téléphonie mobile de type DU qui lui est rattaché (via son dispositif d'interface de communication de type LAN 141 pour le routeur SR 121), le routeur examine la table de service (première table de service) pour identifier quelle est l'adresse (LBA) du routeur auquel est rattaché l'équipement de téléphonie mobile de type CU auquel les données sont adressées (identifié par son adresse de niveau 3 (couche réseau) du modèle OSI ou de niveau 2 (couche liaison) du modèle OSI, telle qu'on la retrouve dans la colonne IPA ou respectivement EA de la table de service. Lorsque des labels sont utilisés, le routeur en question ajoute le label associé dans la table de service, et propage les données à destination dudit routeur auquel est rattaché l'équipement de téléphonie mobile de type CU en question en se référant à sa table de routage. Ce label est retiré par le routeur auquel est rattaché l'équipement de téléphonie mobile de type CU avant de propager (via son dispositif d'interface de communication de type LAN 142 pour le routeur GR 122) à l'équipement de téléphonie mobile de type CU en question.

Lorsque le routeur reçoit des données à destination de l'équipement de téléphonie mobile de type DU qui lui est rattaché, le routeur examine la table de service (première table de service). L'adresse (LBA) du routeur auquel est rattaché l'équipement de téléphonie mobile de type DU en question est la sienne, et le routeur transmet les données à l'équipement de téléphonie mobile de type DU qui lui est rattaché (via son dispositif d'interface de communication de type LAN 141 pour le routeur SR 121). La première table de service permet de faire des vérifications que les données reçues sont cohérentes (SNSID, MPLSL, ID, adresses).

La **Fig. 5D** illustre schématiquement un algorithme de traitement de message d'annonce de présence de d'équipement de téléphonie mobile de type CU ou DU par un routeur connecté à un équipement de téléphonie mobile de type CU (tel que le routeur GR 122).

Dans une étape 562, le routeur en question reçoit un message d'annonce de présence de d'équipement de téléphonie mobile de type CU ou DU. Le message d'annonce est un message de niveau 3 (couche réseau) du modèle OSI ou de niveau 2 (couche liaison) du modèle OSI (de préférence, de niveau 3 du modèle OSI) et a le format « type-longueur-valeur » tel que décrit ci-dessus.

Dans une étape 544, le routeur en question opère un filtrage éventuel qui rejette le message d'annonce de présence d'équipement de téléphonie mobile de type CU ou DU.

Le routeur rejette tout message d'annonce de présence d'équipement de téléphonie mobile de type CU ou DU dont le routeur en question aurait été à l'origine (et qu'un autre routeur lui aurait propagé).

Le routeur rejette tout message d'annonce de présence d'équipement de téléphonie mobile de type CU ou DU pour un service, identifié par un identifiant SNSID, qui n'est pas inclus dans sa table de service.

Dans une étape 566, le routeur en question enrichit sa table de service (deuxième table de service) au besoin, c'est-à-dire en fonction du filtrage éventuellement réalisé à l'étape 564.

Le routeur utilise pour ce faire les informations contenues dans le message reçu à l'étape 562.

Dans une étape 568, le routeur en question utilise la table de service ainsi enrichie pour réaliser du routage de données.

Lorsque le routeur reçoit des données concernant un service dont l'identifiant SNSID n'est pas répertorié dans sa table de service, le routeur en question jette les données reçues.

Lorsque le routeur reçoit des données en provenance de l'équipement de téléphonie mobile de type CU qui lui est rattaché (via son dispositif d'interface de communication de type LAN 142 pour le routeur GR 122), le routeur examine la table de service (deuxième table de service) pour identifier quelle est l'adresse (LBA) du routeur auquel est rattaché l'équipement de téléphonie mobile de type DU ou CU auquel les données sont adressées (identifié par son adresse de niveau 3 (couche réseau) du modèle OSI ou de niveau 2 (couche liaison) du modèle OSI, telle qu'on la retrouve dans la colonne IPA ou respectivement EA de la table de service. Lorsque des labels sont utilisés, le routeur en question ajoute le label associé dans la table de service, et propage les données à destination dudit routeur auquel est rattaché l'équipement de téléphonie mobile de type DU ou CU en question en se référant à sa table de routage. Ce label est retiré par le routeur auquel est rattaché l'équipement de téléphonie mobile de type DU ou CU avant de propager (via son dispositif d'interface de communication de type LAN 142 pour le routeur GR 122) à l'équipement de téléphonie mobile de type DU ou CU en question.

Lorsque le routeur reçoit des données à destination de l'équipement de téléphonie mobile de type CU qui lui est rattaché, le routeur examine la table de service (deuxième table de service). L'adresse (LBA) du routeur auquel est rattaché l'équipement de téléphonie mobile de type CU en question est la sienne, et le routeur transmet les données à l'équipement de téléphonie mobile de type CU qui lui est rattaché (via son dispositif d'interface de communication de type LAN 142 pour le routeur SR 122). La deuxième table de service permet de faire des vérifications que les données reçues sont cohérentes (SNSID, MPLSL, ID, adresses).

La **Fig. 6** illustre schématiquement un exemple d'architecture matérielle utilisable pour implémenter des équipements du système de communication satellite 100. Cette architecture matérielle est notamment utilisable pour implémenter le routeur SR 121, le routeur GR 122, l'équipement DU 111 et l'équipement CU 112.

L'architecture matérielle comprend, reliés par un bus de communication 610 : un processeur ou CPU (pour « Central Processing Unit » en anglais) 601, ou une grappe de tels processeurs, comme par exemple des GPU (« Graphics Processing Units » en anglais) ; une mémoire vive RAM (pour « Random Access Memory » en anglais) 602 ; une mémoire morte ROM (pour « Read Only Memory » en anglais) 603, ou une mémoire réinscriptible de type EEPROM (« Electrically Erasable Programmable ROM » en anglais), par exemple de type Flash ; un dispositif de stockage de données, tel qu'un disque dur HDD (pour « Hard Disk Drive » en anglais) 604, ou un lecteur de support de stockage, tel qu'un lecteur de cartes SD (pour « Secure Digital » en anglais) ; un ensemble d'interfaces d'entrées et/ou sorties 605, telles que des interfaces de communication.

Le processeur 601 est capable d'exécuter des instructions chargées dans la RAM 602 à partir de la ROM 603, d'une mémoire externe (non représentée), d'un support de stockage, tel qu'une carte SD ou le disque dur HDD, ou d'un réseau de communication. Lorsque la plateforme matérielle est mise sous tension, le processeur 601 est capable de lire de la RAM 602 des instructions et de les exécuter. Ces instructions forment un programme d'ordinateur causant l'implémentation, par le processeur 601, des étapes, comportements et algorithmes décrits ici.

Tout ou partie des étapes, comportements et algorithmes décrit ici peut ainsi être implémenté sous forme logicielle par exécution d'un ensemble d'instructions par une machine programmable, telle qu'un DSP (« Digital Signal Processor » en anglais) ou un processeur, ou être implémenté sous forme matérielle par une machine ou un composant (« chip » en anglais) dédié ou un ensemble de composants dédiés (« chipset » en anglais), tel qu'un FPGA (pour « Field-Programmable Gate Array » en anglais) ou un ASIC (pour « Application-Specific Integrated Circuit » en anglais). D'une manière générale, la plateforme matérielle comprend de la circuiterie électronique agencée et configurée pour implémenter les étapes, comportements et algorithmes décrits ici.

## Revendications

1. Procédé d'annonce dans le cadre d'un service de téléphonie mobile implémenté par un système de communication (100) comportant un équipement satellite (101) relié à un équipement au sol (102) par un lien de communication satellite (150, 153), l'équipement satellite (101) incluant un premier routeur (121) et un équipement de téléphonie mobile de type unité distribuée (111) rattaché au premier routeur (121), l'équipement au sol (102) incluant un deuxième routeur (122) et un équipement de téléphonie mobile de type unité centralisée (112) rattaché au deuxième routeur (122),
**caractérisé en ce que** le premier routeur (121) annonce (506) la présence de l'équipement de téléphonie mobile de type unité distribuée (111) et le deuxième routeur (122) annonce (526) la présence de l'équipement de téléphonie mobile de type unité centralisée (112) en utilisant des messages d'annonce de couche réseau ou de couche liaison ayant un format « type-longueur-valeur » TLV qui comporte :
- un champ « type » (T) ayant une valeur dédiée à l'annonce de présence d'équipement de téléphonie mobile de type unité distribuée ou de type unité centralisée ;
- un champ (SNSID) fournissant un identifiant du service de téléphonie mobile ;
- une information (F, F4) indiquant si le message en question concerne une annonce de présence d'équipement de téléphonie mobile de type unité distribuée ou si le message en question concerne une annonce de présence d'équipement de téléphonie mobile de type unité centralisée ;
- un champ (LBA) fournissant une adresse de couche réseau du routeur transmettant le message d'annonce en question ; et
- un champ (IPA/EA) fournissant une adresse de couche réseau et/ou une adresse de couche liaison d'équipement de téléphonie mobile dont la présence est annoncée par le message d'annonce.

2. Procédé selon la revendication 1, dans lequel le message d'annonce qui annonce la présence de l'équipement de téléphonie mobile de type unité distribuée est transmis par le premier routeur (121) lorsque le premier routeur (121) détecte la présence de l'équipement de téléphonie mobile de type unité distribuée (111) par le biais d'un dispositif d'interface de réseau local (141) du premier routeur (121) auquel est connecté l'équipement de téléphonie mobile de type unité distribuée (111) au premier routeur (121), et le message d'annonce qui annonce la présence de l'équipement de téléphonie mobile de type unité centralisée (112) est transmis par le deuxième routeur (122) lorsque le deuxième routeur (122) détecte la présence de l'équipement de téléphonie mobile de type unité centralisée (112) par le biais d'un dispositif d'interface de réseau local (142) du deuxième routeur (122) auquel est connecté l'équipement de téléphonie mobile de type unité centralisée (112) au deuxième routeur (122).

3. Procédé selon la revendication 1 ou 2, dans lequel chaque message d'annonce comporte un label, destiné à effectuer un routage entre routeurs par commutation de labels et qui est affecté par le routeur transmettant ledit message d'annonce.

4. Procédé selon l'une quelconque des revendications 1 à 3, dans lequel le premier routeur (121) implémente une première table de service et le deuxième routeur (122) implémente une deuxième table de service, à partir d'une détection de présence de l'équipement de téléphonie mobile de type unité distribuée (111) ou centralisée (112) qui leur sont respectivement rattachés et à partir de messages d'annonce reçus audit format « type-longueur-valeur » TLV, chaque dite table de service étant utilisée pour déterminer quel routeur joindre pour transmettre des données à tel ou tel équipement de téléphonie mobile annoncé.

5. Procédé selon la revendication 4, dans lequel le premier routeur (121) effectue un filtrage (542) qui rejette tout message d'annonce qui annonce la présence d'un équipement de téléphonie mobile de type unité distribuée.

6. Système de communication (100) destiné à être utilisé dans le cadre d'un service de téléphonie mobile, le système de communication (100) comportant un équipement satellite (101) relié à un équipement au sol (102) par un lien de communication satellite (150, 153), l'équipement satellite (101) incluant un premier routeur (121) et un équipement de téléphonie mobile de type unité distribuée (111) rattaché au premier routeur (121), l'équipement au sol (102) incluant un deuxième routeur (122) et un équipement de téléphonie mobile de type unité centralisée (112) rattaché au deuxième routeur (122), **caractérisé en ce que** le premier routeur (121) est configuré pour annoncer (506) la présence de l'équipement de téléphonie mobile de type unité distribuée (111) et le deuxième routeur (122) est configuré pour annoncer (526) la présence de l'équipement de téléphonie mobile de type unité centralisée (112) en utilisant des messages d'annonce de couche réseau ou de couche liaison ayant un format « type-longueur-valeur » TLV qui comporte :
- un champ « type » (T) ayant une valeur dédiée à l'annonce de présence d'équipement de téléphonie mobile de type unité distribuée ou de type unité centralisée ;
- un champ (SNSID) fournissant un identifiant du service de téléphonie mobile ;
- une information (F, F4) indiquant si le message en question concerne une annonce de présence d'équipement de téléphonie mobile de type unité distribuée ou si le message en question concerne une annonce de présence d'équipement de téléphonie mobile de type unité centralisée ;
- un champ (LBA) fournissant une adresse de couche réseau du routeur transmettant le message d'annonce en question ; et
- un champ (IPA / EA) fournissant une adresse de couche réseau et/ou une adresse de couche liaison de l'équipement de téléphonie mobile dont la présence est annoncée par le message d'annonce.
